# EUROPEAN PATENT APPLICATION

(11) **EP 2 765 201 A1**
(43) Date of publication of application: **13.08.2014**
(21) Application number: 14153774.6
(22) Date of filing: 04.02.2014
(51) Int. Cl.: C12Q 1/00, G01N 27/327

(54) **Silver nanowire-containing composition, biosensor strip comprising the same and its preparation method**

(30) Priority: 08.02.2013 TW 102105150
(71) Applicant: K Cubic Research Co., Ltd, Keelung City (TW); INDUSTRIAL TECHNOLOGY RESEARCH INSTITUTE, Chutung, Hsinchu (TW)
(72) Inventor: Sun, Wen-Hsien, Hsinchu (TW); Lee, Hou-Yu, Keelung City (TW); Ko, Shyh-Dar, Keelung City (TW); Ko, Ching-Chung, Keelung City (TW)
(74) Representative: Viering, Jentschura & Partner Patent- und Rechtsanwälte

(57) **Abstract**

Provided is a silver nanowire-containing composition for a biosensor strip, a biosensor strip comprising the same and its preparation method. The biosensor strip comprises a conductive pattern layer (20) made of the silver nanowire-containing composition. With the aspect ratio of 50 to 500, the silver nanowire-containing composition has good dispersion and high conductivity, such that the biosensor strip comprising the same can have high stability and provide a more accurate and efficient detection.

## Description

### 1. Field of the Invention

The present invention relates to a silver nanowire-containing composition for biosensor strip, a biosensor strip comprising the same and its preparation method.

### 2. Description of the Prior Arts

With the advance of medical technology, the average life span of people is longer than before. Chronic diseases threaten people's health more than acute diseases and become one of the major causes of death.

Among various chronic diseases, diabetes mellitus, also called diabetes, is the most common one, which causes many complications such as retinopathy, neuropathy, cardiovascular disease, and nephropathy. Without early diagnosis and adequate treatment, patients with diabetes mellitus are at high risk of blindness, amputations, high blood pressure, stroke, and even death. Regular and long-term monitoring and management on glucose level and blood pressure are thus important to control patient's condition, and are helpful to delay or even prevent the onset of diabetes complications.

To facilitate self-monitoring of blood glucose, various easy-to-use blood glucose meters have been developed for patients to regularly measure their glucose levels in the bloods. However, blood glucose meters are not workable for blood glucose measurement without biosensor strips. Accordingly, the biosensor strips' production costs, consumptions, measure accuracies and detection times play important roles for blood glucose measurement.

Commonly used biosensor strip at present is carbon ink-typed test strip. To ensure a correct detection result, the conductive carbon ink layer of the carbon ink-typed test strip is disposed on the conductive silver layer to prevent unexpected reaction between the conductive silver layer and bio-sensing material or analyte. Nevertheless, the carbon ink-typed test strip with unstable conductivity often provides low detection accuracy, such that the glucose level measured by blood glucose meter and the carbon ink-typed test strip is apt to be higher than the real level. As a result, another biosensor strip with higher conductivity, metallic test strip, is designed to overcome the drawbacks of the carbon ink-typed test strip.

Unfortunately, the metallic test strip also has several disadvantages to be overcome. The advantages and disadvantages of the carbon ink-typed test strip and metallic test strip are listed in Table 1.

**Table 1. Comparison of carbon ink-typed test strip and metallic test strip**

| | carbon ink-typed test strip | metallic test strips |
|---|---|---|
| Advantage | 1. low production cost | 1. high detection accuracy |
| | | 2. short detection time |
| | | 3. high conductivity (resistance in a range from 8 Ohm to 13 Ohm) |
| Disadvantage | 1. low detection accuracy | 1. high production cost (need for various metal materials) |
| | 2. long detection time | |
| | 3. low conductivity (resistance about 1 kOhm) | 2. easy to be damaged |
| | | 3. unstable |
| | | 4. low production yield |
| | | 5. causing pollution during the process |

As shown in Table 1, both carbon ink-typed test strip and metallic test strip have their respective disadvantages in the measurement. There is still a need for developing a novel biosensor strip to improve the drawbacks as mentioned above.

In view of the drawbacks, the objective of the present invention is to provide a silver nanowire-containing composition for biosensor strip, which is useful for improving the accuracy and stability of the biosensor strip.

To achieve the foregoing objective, the present invention provides a silver nanowire-containing composition for a biosensor strip. The silver nanowire-containing composition comprises a coating agent and multiple silver nanowires enclosed by the coating agent, the coating agent comprises a hydroxyl compound, a carbonyl compound or their combination, and the silver nanowires have aspect ratios, i.e., the ratio of the lengths of silver nanowires to their widths, ranging from 50 to 500.

Preferably, the silver nanowires have lengths ranging from 50 nanometers to 100000 nanometers; more preferably, ranging from 5000 nanometers to 50000 nanometers.

Preferably, the silver nanowires are each enclosed by the coating agent to form coating layers around the silver nanowires, and the coating layers have thicknesses ranging from 0.1 nanometers to 100 nanometers. More preferably, the thicknesses of the coating layers range from 1 nanometer to 50 nanometers.

In accordance with the present invention, the coating agent may be a hydroxyl compound having a hydroxyl group (-OH group), a carbonyl compound having a carbonyl group (-C=O group) or their combination.

More specifically, the applicable hydroxyl compound may be, but not limited to, polyethylene glycol; 1,2-ethylene glycol; 1,2-propylene glycol; 3-chloro-1,2-propylene glycol; 1,3-propylene glycol; 1,3-butanediol; 1,4-butanediol; 2-methyl-1,3-propanediol; 2,2-dimethyl-1,3-propanediol, also called neopentylglycol; 2-ethyl-1,3-propanediol; 2,2-diethyl-1,3-propanediol; 1,5-pentanediol; 2-ethyl-1,3-pentanediol; 2,2,4-trimethyl-1,3-pentanediol; 3-methyl-1,5-pentanediol; 1,2-hexanediol; 1,5-hexanediol; 1,6-hexanediol; bis(hydroxymethyl)cyclohexane; 1,8-octanediol; bicycle-octanediol; 1,10-decanediol; tricycle-decanediol; norbornanediol; 1,18-dihydroxyoctadecane; glycerin; trimethylolethane; trimethylolpropane; 2-ethyl-2-(hydroxymethyl)-1,3-propanediol; 1,2,6-hexanetriol; pentaerythritol; quinitol; mannitol; sorbitol; diethylene glycol; ethylene glycol; tetraethylene glycol; tetramethylene glycol; dipropylene glycol; diisopropylene glycol; tripropylene glycol; 1,11-(3,6-dioxaundecane)diol; 1,14-(3,6,9,12-tetraoxatetradecane)diol; 1,8-(3,6-dioxa-2,5,8-trimethyloctane)diol; 1,14-(5,10-dioxatetradecane) diol; castor oil; 2-butyne-1,4-diol; N,N-bis(hydroxyethyl)benzamide; 4,4'-bis(hydroxymethyl)diphenylsulfone; 1,4-benzenedimethanol; 1,3-bis(2-hydroxyethoxy)benzene; 1,2-resorcinol; 1,3-resorcinol; 1,4-resorcinol; 1,6-dihydroxynaphthalene; 2,6-dihydroxynaphthalene; 2,5-dihydroxynaphthalene; 2,7-dihydroxynaphthalene; 2,2'-biphenol; 4,4'-biphenol; 1,8-dihydroxybiphenyl; 2,4-dihydroxy-6-methyl-pyrimidine; 4,6-dihydroxypyrimidine; 3,6-dihydroxypyridazine; bisphenol A; 4,4'-ethylidenebisphenol; 4,4'-isopropylidene bis(2,6-dimethylphenol); bis(4-hydroxyphenyl) methane; 1,1-bis(4-hydroxyphenyl)-1-phenylethane (bisphenol C); 1,4-bis(2-hydroxyethyl)piperazine; or bis(4-hydroxyphenyl)ether.

Preferably, the hydroxyl compound may be polyhydroxyl compound, which has molecular weight ranging from 8010 Da to 1800000 Da. Preferably, the polyhydroxyl compound includes, but not limited to: polyhydroxyl alkane, heteroaliphatic polyol, saturated aliphatic polyol, aromatic polyol, saturated heteroalicyclic polyol, heteroaromatic polyol or any combination thereof.

More specifically, said polyhydroxyl compound may be, but not limited to: polyoxyethylene, polyoxypropylene, ethylene oxide-terminated polypropylene glycol, ethylene oxide-terminated polypropylene triol, polybutanediol, polydialkylsiloxane diol, polycaprolactone polyol, polyethylene glycol or any combination thereof.

Preferably, the carbonyl compound may be pyrrolidones, polyamides, polyesters or any combination thereof.

More specifically, the pyrrolidones may be, but not limited to, polyvinyl pyrrolidone (PVP) or N-methyl pyrrolidone (NMP), and the polyesters may be hydroxy-terminated polyester.

In accordance with the present invention, the hydroxyl group or carbonyl group of the coating agent enclose each of the silver nanowires by van der waals interaction.

Preferably, the silver nanowire-containing composition comprises 90 percents by weight (wt%) to 95 wt% of polymer and 0.1 wt% to 10 wt% of silver nanowires based on the total amount of the silver nanowire-containing composition.

In accordance with the present invention, the applicable polymer may be, but not limited to, polyurethane (PU), epoxy resin, polymethyl methacrylate (PMMA), polyvinyl chloride (PVC), polystyrene (PS) or any combination thereof.

Preferably, the aspect ratios of the silver nanowires are within 50 and 500 to ensure the silver nanowires are well dispersed in the polymer.

More preferably, the silver nanowire-containing composition further comprises an additive selected from the group consisting of a polymeric dispersant, a crosslinker, a thickener, a defoaming agent and any combination thereof.

In accordance with the present invention, the applicable polymeric dispersant may be an acidic group-containing compound, such as alkanolamine, propanediol, or polycarbonate, but not limited thereto. Preferably, an amount of the polymeric dispersant ranges from 0.01 wt% to 0.05 wt% based on the total amount of the silver nanowire-containing composition.

In accordance with the present invention, the applicable thickener may include a material selected from the group consisting of, but not limited to: hydroxyethyl cellulose (HEC), methyl cellulose (MC), acetyl cellulose, hydroxypropyl cellulose (HPC), hydroxypropylmethyl cellulose (HPMC), carboxymethyl cellulose (CMC) and any combination thereof. Said hydroxyethyl cellulose may be 2-hydroxyethyl cellulose. Preferably, an amount of the thickener ranges from 0.5 wt% to 5 wt% based on the total amount of the silver nanowire-containing composition.

In accordance with the present invention, the applicable defoaming agent may include a material selected from the group consisting of, but not limited to: α-terpineol (C₁₀H₁₈O), octane, octanol and any combination thereof. Preferably, an amount of the defoaming agent ranges from 0.01 wt% to 0.05 wt% based on the total amount of the silver nanowire-containing composition.

In accordance with the present invention, the applicable crosslinker may include a material selected from the group consisting of, but not limited to: polyurethane, epoxy resin, polymethyl methacrylate, polyvinyl chloride, polystyrene and any combination thereof. Preferably, an amount of the crosslinker ranges from 0.01 wt% to 0.05 wt% based on the total amount of the silver nanowire-containing composition.

In accordance with the present invention, the foregoing additives are helpful for improving the dispersion uniformity of the silver nanowires in the polymer. If the silver nanowire-containing composition comprises the coating agent, silver nanowires, polymer and at least one additive, the amount of the silver nanowire preferably ranges from 0.1 wt% to 5 wt% based on the total amount of the silver nanowire-containing composition. More preferably, the amount of the silver nanowire preferably ranges from 0.1 wt% to 2 wt% based on the total amount of the silver nanowire-containing composition.

Another objective of the present invention is to provide a biosensor strip with high stability, high detection accuracy and short detection time.

To achieve the foregoing objective, the present invention provides a biosensor strip comprising a substrate, a conductive pattern layer, and a protection layer. The conductive pattern layer is disposed on the substrate and comprises a foregoing silver nanowire-containing composition. The protection layer covers a portion of the substrate and a portion of the conductive pattern layer to define two uncovered regions separated from each other, i.e., a reaction region and a connection region. The other portion of the conductive pattern layer is exposed in the reaction region and the connection region.

Preferably, the conductive pattern layer has a thickness equal to or more than 4 micrometers. More preferably, the thickness of the conductive pattern layer ranges from 4 micrometers to 60 micrometers, even more preferably, ranges from 4 micrometers to 50 micrometers.

In accordance with the present invention, the thickness of the coating layers of the silver nanowire-containing composition preferably ranges from 1 nanometer to 50 nanometers, such that a biosensor strip comprising the silver nanowire-containing composition can provide higher detection accuracy in measurement.

In accordance with the present invention, the applicable material of the substrate includes polyethylene terephthalate (PET), polyvinyl chloride (PVC) or polychlorinated biphenyl (PCB). The applicable material of the protection layer includes, but not limited to, PET or PVC.

In accordance with the present invention, the biosensor further comprises a bio-sensing material layer disposed in the reaction region and disposed on the conductive pattern layer in the reaction region. The bio-sensing material layer contacts the other portion of the conductive pattern layer that is exposed in the reaction region to undergo bio-sensing detection. Preferably, the bio-sensing material layer may include enzyme, antibody or antigen, which is specific to the analyte. For example, the bio-sensing material layer may include glucose oxidase (GOD) for blood glucose measurement.

Preferably, the conductive pattern layer has a surface resistivity (Rs) equal to or less than 100 Ohm per square (Ω/sq, Ω/□); more preferably, the surface resistivity of the conductive pattern layer is equal to or less than 25 Ohm per square.

Preferably, the conductive pattern layer has a hardness equal to or more than 2H.

The present invention further provides a method of preparing the foregoing biosensor strip, comprising the steps of: providing a silver nanowire-containing composition as mentioned above; screen printing a conductive pattern layer on a substrate by using the silver nanowire-containing composition; forming a protection layer on the conductive pattern layer, so as to obtain the biosensor strip.

Preferably, the step of screen printing the conductive pattern layer on the substrate comprises: well-dispersing the silver nanowire-containing composition with an ultrasonic oscillation and/or a stirrer to ensure that the silver nanowires of the silver nanowire-containing composition are at a uniform state. Accordingly, the dispersion uniformity of the silver nanowires in the biosensor strip is thus improved.

Preferably, the step of screen printing the conductive pattern layer on the substrate comprises: screen printing the conductive pattern layer on the substrate by using the silver nanowire-containing composition, and drying the conductive pattern layer at a temperature of 120°C to 130°C for solidification

Preferably, the step of screen printing the conductive pattern layer on the substrate comprises: pre-heating the substrate to a temperature of 80°C to 90°C to obtain a pre-heated substrate, and screen printing the conductive pattern layer on the pre-heated substrate by using the silver nanowire-containing composition.

In accordance with the present invention, the mesh count of the used screen plate ranges from 80 meshes per inch to 250 meshes per inch.

The present invention further provides a method of preparing the foregoing biosensor strip, comprising the steps of: providing a silver nanowire-containing composition as mentioned above; screen printing a conductive pattern layer on a substrate by using the silver nanowire-containing composition; coating a protection layer on a portion of the substrate and on a portion of the conductive pattern layer to define a reaction region and a connection region separated from each other and uncovered by the protection layer; and forming a bio-sensing material layer on the conductive pattern layer, so as to obtain the biosensor strip.

In accordance with the present invention, said silver nanowires may be formed in a linear shape or a tubular shape.

In conclusion, the silver nanowire-containing composition, the biosensor strip and the preparation method of the biosensor strip have several beneficial effects of:
(1) High detection accuracy: Silver nanowires with aspect ratio of 50 to 500 are well-dispersed in the matrix, thus the detection results obtained from the biosensor strip at various positions in the reaction region are consistent and more accurate than those obtained from the conventional biosensor test strip.
(2) Lower damage risk: By means of controlling the aspect ratio of silver nanowires within 50 and 500, the conductive pattern layer made of the silver nanowire-containing composition does have a higher conductivity. The biosensor strip of the present invention can detect the analyte more quickly than the conventional biosensor test strip, thereby reducing the risk of damage.
(3) Stable and higher production yield: Since the silver nanowires are enclosed by the coating agent, the oxidation of silver can be prevented. A conventional carbon ink layer on the conductive pattern layer is no more required in the biosensor strip of the present invention, and only one screen printing step is necessary in the process. Accordingly, the biosensor strip of the present invention has a better stability and a higher production yield than those of the conventional biosensor test strip.
(4) Environmentally friendly process: No polluting agent is used during the production, thus the preparation method of the biosensor strip is more environmentally friendly than that of the conventional biosensor test strip.

Other objectives, advantages and novel features of the invention will become more apparent from the following detailed description when taken in conjunction with the accompanying drawings.

### IN THE DRAWINGS

Fig. 1 is an optical microscope image of the silver nanowire-containing composition of Preparation Example 1 in accordance with the present invention;
Fig. 2 is a transmission electron microscope image of the silver nanowire-containing composition of Preparation Example 1 in accordance with the present invention;
Fig. 3 is a scanning electron microscope image of the silver nanowire-containing composition of Preparation Example 1 in accordance with the present invention;
Fig. 4 is an exploded view of the biosensor strips of Examples 1 to 5 in accordance with the present invention;
Fig. 5 a top view of the biosensor strips of Examples 1 to 5 in accordance with the present invention;
Fig. 6 illustrates the surface resistivity of the conductive pattern layers of Examples 1 to 5 with various thicknesses in the Test Example 1; and
Fig. 7 illustrates the results of detection accuracy of the biosensor strips in Test Example 3.

Hereinafter, one skilled in the arts can easily realize the advantages and effects of silver nanowire-containing composition, a biosensor strip and its preparation method in accordance with the present invention from the following embodiments. The descriptions proposed herein are just preferable embodiments for the purpose of illustrations only, not intended to limit the scope of the invention. Various modifications and variations could be made in order to practice or apply the present invention without departing from the spirit and scope of the invention.

### Preparation Example 1: silver nanowire-containing composition

100 ml of ethylene glycol solution was pre-heated to 150°C, 2 grams of silver nitrate (AgNO₃) and 1.533 grams of PVP solvent were poured into the ethylene glycol solution and then heated for several minutes to obtain silver nanowires enclosed by a very thick PVP layer.

After that, the silver nanowires were further centrifuged to reduce the thickness of the PVP layer, so as to obtain the silver nanowires enclosed by the carbonyl compound.

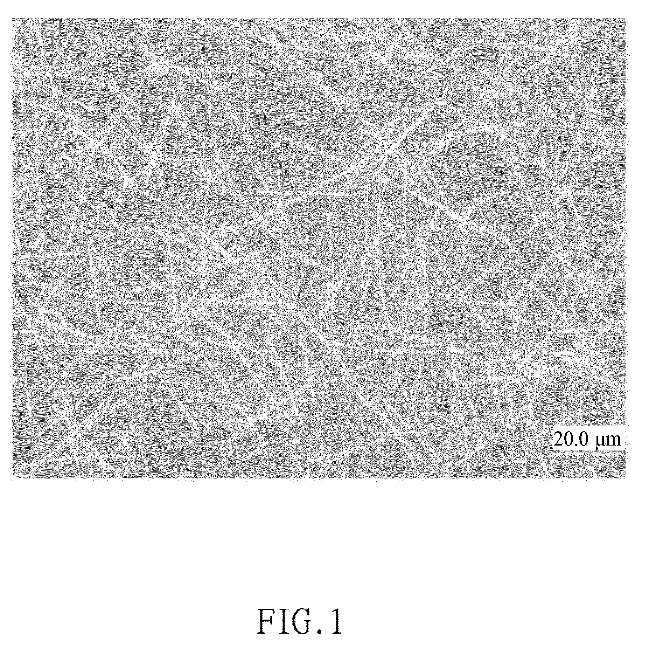

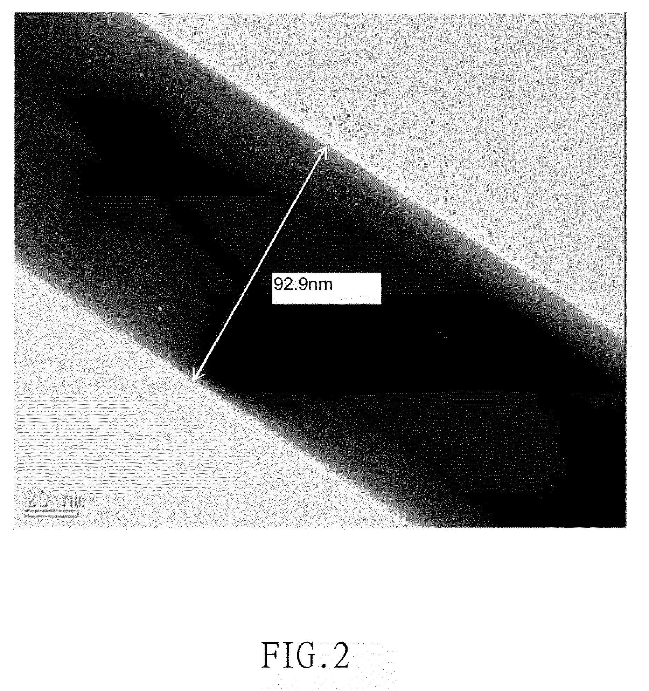

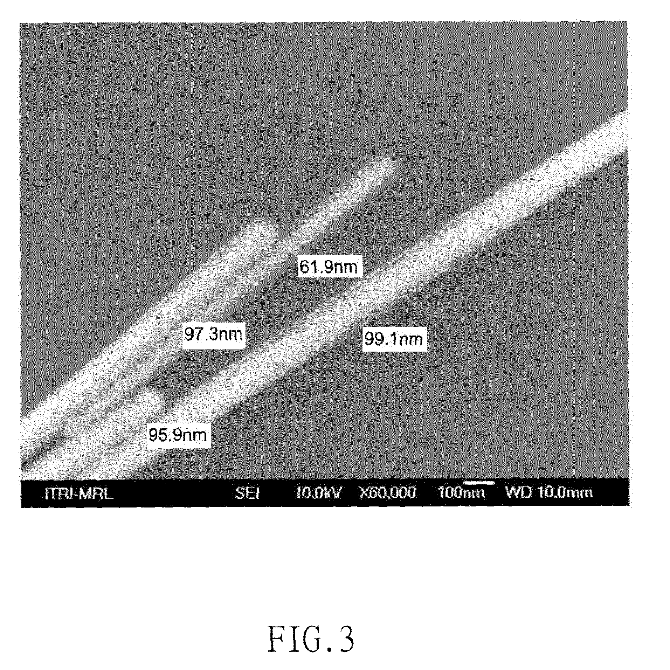

Herein, the experimental result demonstrated that the silver nanowires enclosed by the carbonyl compound of the instant Preparation Example had a conductivity of 1.2×10⁷ S/m. With reference to Figs. 1 to 3, the obtained silver nanowires had aspect ratio about 200 and lengths in a range of 60 nanometers to 100 nanometers. With reference to Fig. 3, SEM observation showed that the silver nanowires were enclosed by 0.1 nm to 10 nm-thick PVP layers.

After that, the foregoing silver nanowires enclosed by PVP, PU as polymer, 2-hydroxyethyl cellulose as a thickener, and α-terpineol as a defoaming agent were well-mixed with an ultrasonic oscillation and a planetary centrifugal stirrer for 3 minutes, and a silver nanowire-containing composition comprising well-dispersed silver nanowires was obtained. The usages of the silver nanowires enclosed by carbonyl compound, polymer, thickener and defoaming agent were listed in Table 2.

**Table 2. Usages of the components contained in the silver nanowire-containing composition of Samples 1 to 5**

| | Sample 1 | Sample 2 | Sample 3 | Sample 4 | Sample 5 |
|---|---|---|---|---|---|
| Silver nanowire | 1.37 wt% | 1.61 wt% | 2.89 wt% | 3.39 wt% | 4.12 wt% |
| polymer | 94.78 wt% | 94.54 wt% | 93.26 wt% | 92.76 wt% | 92.03 wt% |
| Thickener | 3.8 wt% | 3.8 wt% | 3.8 wt% | 3.8 wt% | 3.8 wt% |
| Defoaming agent | 0.05 wt% | 0.05 wt% | 0.05 wt% | 0.05 wt% | 0.05 wt% |
| Total | 100 wt% | 100 wt% | 100 wt% | 100 wt% | 100 wt% |

### Examples 1 to 5: biosensor strip

The biosensor strips of Examples 1 to 5 were prepared by a similar method as described below.

First, a PET substrate was provided and pre-heated at 70°C to 80°C to obtain a pre-heated PET substrate.

Then the silver nanowire-containing composition obtained in the Preparation Example 1 was printed on the pre-heated PET substrate with a 200 mesh/inch of screen plate, and dried at 120°C for 3 minutes for solidification to form a 50 µm-thick conductive pattern layer with a desired print pattern.

Subsequently, a PVC slurry was coated on a portion of the substrate and a portion of the conductive pattern layer, and then dried for a while to form a protection layer. The protection layer partially covered the substrate and the conductive pattern layer and defined a reaction region and a connection region separated from each other and uncovered by the protection layer.

Finally, a bio-sensing material containing GOD was dropped in the reaction region, and then air dried to form a bio-sensing layer in the reaction region. A biosensor strip was obtained.

According to the method, the biosensor strips of Examples 1 to 5 had a similar configuration. The differences among the biosensor strips of Examples 1 to 5 were that the silver nanowire-containing compositions used for biosensor strips in Examples 1 to 5 were Samples 1 to 5 obtained in Preparation Example 1, respectively.

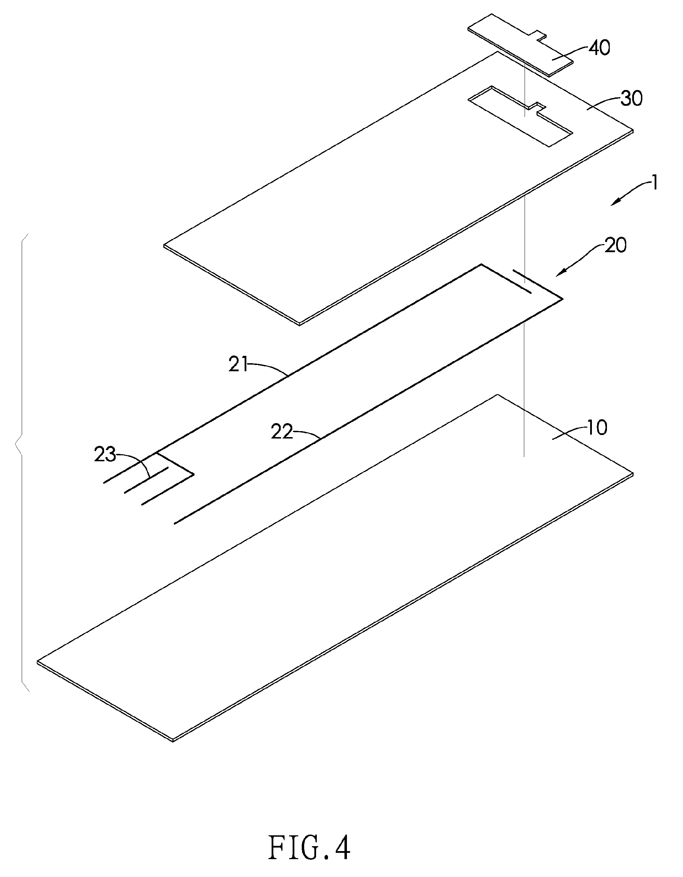

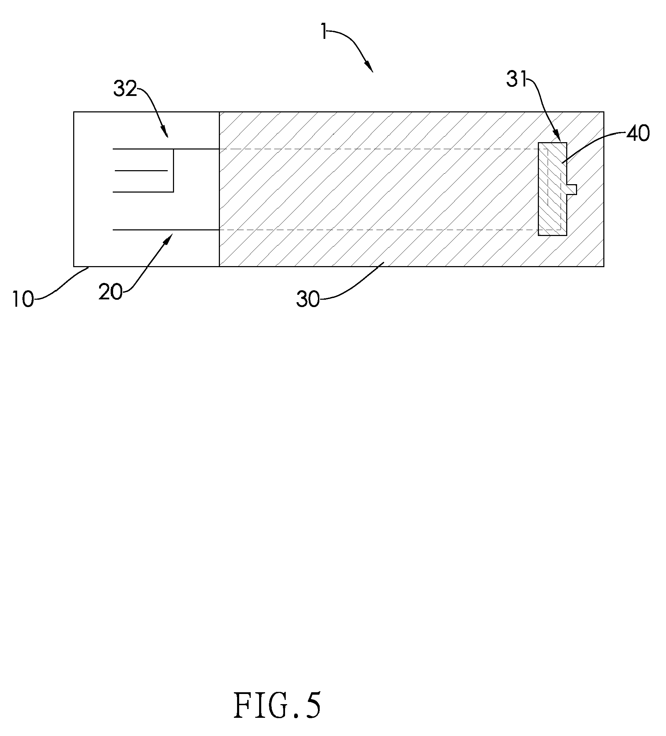

With reference to Figs. 4 and 5, the biosensor strip comprised a substrate 10, a conductive pattern layer 20, a protection layer 30 and a bio-sensing material layer 40.

The substrate 10 was a PET substrate.

The conductive pattern layer 20 having a thickness of 4 micrometers was formed on the substrate 10. The conductive pattern layer 20 was formed with an electrode pattern, which comprised a working electrode (WE) 21, a reference electrode (RE) 22 and a counter electrode (CE) 23 electrically insulated from each other. Said working electrode had two opposite ends, the reference electrode 22 had two opposite ends, and the counter electrode 23 also had two opposite ends.

The protection layer 30 was partially coated on the substrate 10 and the conductive pattern layer 20, such that only a portion of the substrate 10 and a portion of the conductive pattern layer 20 were covered with the protection layer 30, and the other portion of the substrate 10 and the other portion of the conductive pattern layer 20, which were not covered with the protection layer 30, were defined by the protection layer 30 into a reaction region 31 and a connection region 32 separated from each other. That is, one of the ends of the working electrode 21 and one of the ends of the reference electrode 22 were exposed in the reaction region 31, and the other end of the working electrode 21, the other end of the reference electrode 22, and the counter electrode 23 were exposed in the connection region 32.

The bio-sensing material layer 40 was disposed in the reaction region 31 and contacted the two ends of the working electrode 21 and the reference electrode 22 that are exposed in the reaction region. Said bio-sensing material layer 40 comprised GOD, and thereby such a biosensor strip was applicable for blood glucose measurement.

During measurement, the analyte was first reacted with the bio-sensing material in the reaction region 31 and causing a change of current. Subsequently, the current was conducted through the working electrode 21 and reference electrode 22, and then detected with a biosensor meter (not shown) in the connection region 32, so as to produce a biosensor signal.

### Test Example 1: Surface resistivity

In the instant test example, the silver nanowire-containing compositions of Samples 1 to 5 obtained from Preparation Example 1 were respectively coated on PET substrates with various thicknesses, and then solidified to obtain the testing samples 1 to 5.

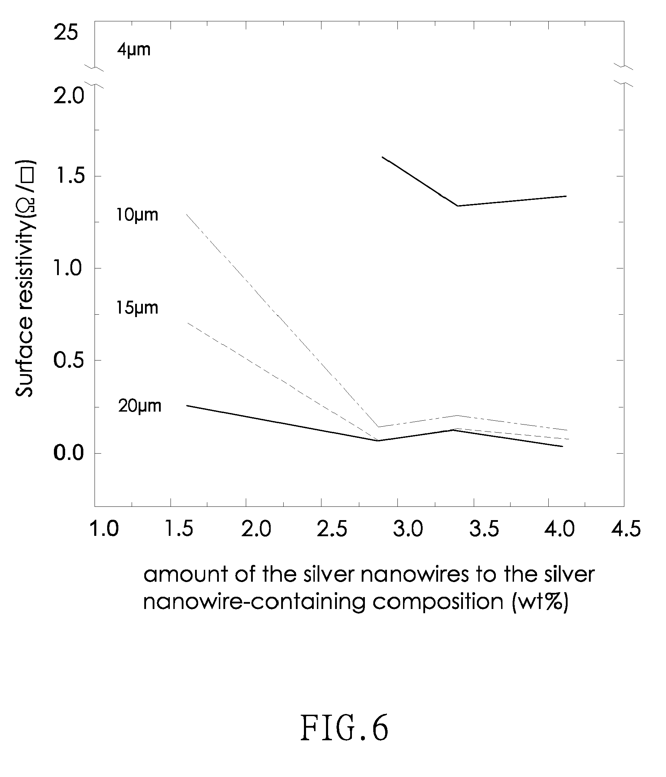

Subsequently, a voltage of -10 V to +10 V was applied to the testing samples, and measured with a surface resistivity meter (type: 5601Y), the results were listed in Table 3 and shown in Fig. 6. Herein, the results obtained from the testing samples were similar with those obtained from the whole biosensor strips. That is, the surface resistivities obtained from the instant Test Example represented the surface resistivities of the whole biosensor strips of Examples 1 to 5, respectively.

**Table 3. Surface resistivities of conductive pattern layers with various thicknesses in the biosensor strips of Examples 1 to 5 (Unit: Ω/□)**

| | Thickness of conductive pattern layer | | | |
|---|---|---|---|---|
| | 4 µm | 10 µm | 15 µm | 20 µm |
| Example 1 | -- | -- | 23 | 3.16 |
| Example 2 | -- | 1.3 | 0.71 | 0.264 |
| Example 3 | 1.61 | 0.141 | 0.06078 | 0.05465 |
| Example 4 | 1.36 | 0.2035 | 0.1179 | 0.12411 |
| Example 5 | 1.41 | 0.112 | 0.067 | 0.0323 |

As shown in Table 3, when the silver nanowires had an aspect ratio of 200 and the amount of the silver nanowires relative to the silver nanowire-containing composition was less than 10 wt% , all conductive pattern layers of Examples 1 to 5 having thicknesses more than 4 micrometers had surface resistivities less than 25Ω/□. The results demonstrated that the silver nanowires with the foregoing aspect ratio were well-dispersed in the polymer, and thus the silver nanowire-containing composition was able to have a lower surface resistivity. Accordingly, the detection time of the biosensor strip was effectively shortened, and the damage of the biosensor strip during measurement could also be reduced.

### Test Example 2: Surface hardness

In the instant test example, the surface hardness of the conductive pattern layers of Examples 1 to 5 were measured by ASTM D 3363 method with a 2H pencil. The results showed that all conductive pattern layers had a surface hardness equal to or more than 2H.

### Test Example 3: Detection accuracy

In the instant test example, the current detected by the biosensor strip was monitored with a potentiostat (type: CHI633C, applied with 0.4 V of initial voltage) in an interval of 0.1 seconds to evaluate the detection accuracy of the biosensor strip of Example 1. The concentrations of blood glucose in the analytes to be tested were 15 mg/dL, 50 mg/dL, 100 mg/dL and 125 mg/dL, respectively.

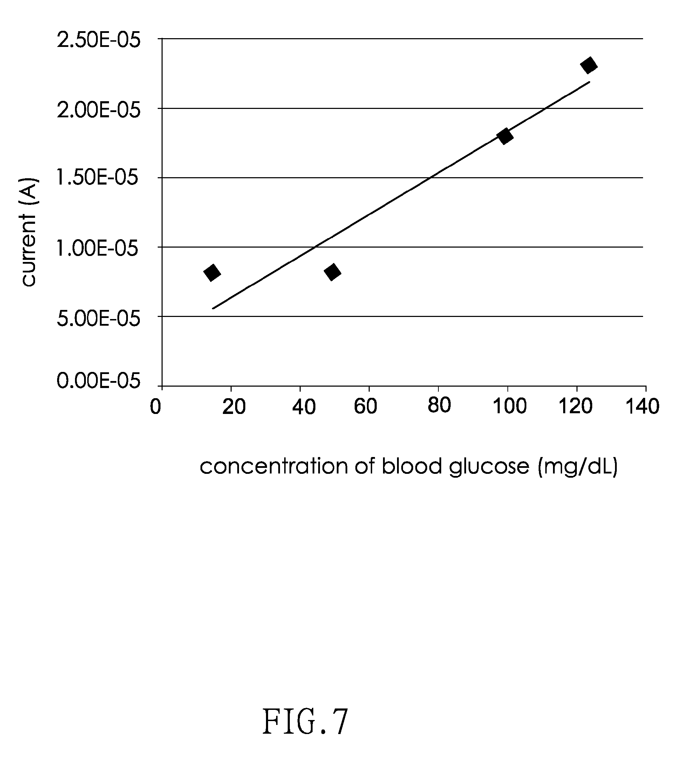

With referenced to Fig. 7, the current produced by the reaction between GOD and an analyte containing 15 mg/dL of blood glucose was 7.70×10⁻⁶ A, the current produced by the reaction between GOD and an analyte containing 50 mg/dL of blood glucose was 8.00×10⁻⁶ A, the current produced by the reaction between GOD and an analyte containing 100 mg/dL of blood glucose was 1.79×10⁻⁵ A, and the current produced by the reaction between GOD and an analyte containing 125 mg/dL of blood glucose was 2.30×10⁻⁵ A.

The aforementioned results demonstrated that the biosensor strip of Example 1 was applicable for testing the analytes with various concentrations of the blood glucose and then producing the sensing instantaneous current. In addition, the current detected by the biosensor strip gave a positive slope with various concentrations of blood glucose in the analytes. It proved that the current detected by the biosensor strip during measurement was useful to calculate the exact concentration of the blood glucose in the analyte, and the biosensor strip could provide a desired detection accuracy especially for blood glucose measurement.

By using the novel silver nanowire-containing composition as the material of the conductive pattern layer, the technical means of the present invention not only simplifies the structure of the biosensor strip, but also improves the detection accuracy, stability and production yield and shortens the detection time. Accordingly, the drawbacks of the carbon ink-typed test strip and metallic test strip were effectively overcome, and thereby the biosensor strip of the present invention is more applicable in the bio-sensing field.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A silver nanowire-containing composition for a biosensor strip, **characterized in** comprising:
a coating agent comprising a hydroxyl compound, a carbonyl compound, or their combination; and
multiple silver nanowires enclosed by the coating agent and having aspect ratios ranging from 50 to 500.

2. The silver nanowire-containing composition as claimed in claim 1, **characterized in that** the silver nanowires have lengths ranging from 50 nanometers to 100000 nanometers.

3. The silver nanowire-containing composition as claimed in claims 1 or 2, **characterized in that** the silver nanowires are each enclosed by the coating agent to form multiple coating layers around the silver nanowires, and the coating layers have thicknesses ranging from 0.1 nanometers to 100 nanometers.

4. The silver nanowire-containing composition as claimed in any one of claims 1 to 3, **characterized in that** the hydroxyl compound is a polyhydroxyl compound, and the molecular weight of the polyhydroxyl compound ranges from 800 Da to 1800000 Da.

5. The silver nanowire-containing composition as claimed in claim 4, **characterized in that** the polyhydroxyl compound is selected from the group consisting of:
polyhydroxyl alkane, heteroaliphatic polyol, saturated aliphatic polyol, aromatic polyol,
saturated heteroalicyclic polyol, heteroaromatic polyol and any combination thereof.

6. The silver nanowire-containing composition as claimed in any one of claims 1 to 5, **characterized in that** the carbonyl compound is pyrrolidones, polyamides, polyesters or any combination thereof.

7. The silver nanowire-containing composition as claimed in any one of claims 1 to 6, **characterized in that** the silver nanowire-containing composition further comprises polymer selected from the group consisting of: polyurethane, epoxy resin, polymethyl methacrylate, polyvinyl chloride, polystyrene and any combination thereof, wherein an amount of the polymer ranges from 90 to 95 percents by weight and an amount of the silver nanowires ranges from 0.1 to 10 percents by weight based on the total amount of the silver nanowire-containing composition.

8. The silver nanowire-containing composition as claimed in any one of claims 1 to 7, **characterized in that** the silver nanowire-containing composition further comprises an additive selected from the group consisting of: a polymeric dispersant, a crosslinker, a thickener, a defoaming agent and any combination thereof.

9. The silver nanowire-containing composition as claimed in claim 8, **characterized in that** a material of the polymeric dispersant is an acidic group-containing compound, and an amount of the polymeric dispersant ranges from 0.01 to 0.05 percents by weight based on the total amount of the silver nanowire-containing composition.

10. The silver nanowire-containing composition as claimed in claim 8, **characterized in that** a material of the crosslinker is selected from the group consisting of: polyurethane, epoxy resin, polymethyl methacrylate, polyvinyl chloride, polystyrene and any combination thereof, and an amount of the crosslinker ranges from 0.01 to 0.05 percents by weight based on the total amount of the silver nanowire-containing composition.

11. The silver nanowire-containing composition as claimed in claim 8, **characterized in that** a material of the thickener is selected from the group consisting of: hydroxyethyl cellulose, methyl cellulose, acetyl cellulose, hydroxypropyl cellulose, hydroxypropylmethyl cellulose, carboxymethyl cellulose and any combination thereof, and an amount of the thickener ranges from 0.5 to 5 percents by weight based on the total amount of the silver nanowire-containing composition.

12. The silver nanowire-containing composition as claimed in claim 8, **characterized in that** a material of the defoaming agent is selected from the group consisting of: α-terpineol, octane, octanol and any combination thereof, and an amount of the defoaming agent ranges from 0.01 to 0.05 percents by weight based on the total amount of the silver nanowire-containing composition.

13. A biosensor strip, **characterized in** comprising:
a substrate (10);
a conductive pattern layer (20) disposed on the substrate (10), the conductive pattern layer comprising the silver nanowire-containing composition as claimed in any one of claims 1 to 12; and
a protection layer (30) covering a portion of the substrate (10) and a portion of the conductive pattern layer (20) to define a reaction region (31) and a connection region (32) separated from each other and uncovered by the protection layer (30), and the other portion of the conductive pattern layer (20) is exposed in the reaction region (31) and the connection region (32).

14. The biosensor strip as claimed in claim 13, **characterized in that** the conductive pattern layer (20) has a thickness equal to or more than 4 micrometers.

15. The biosensor strip as claimed in claims 13 or 14, **characterized in that** the conductive pattern layer (20) has a surface resistivity equal to or less than 100 Ω/sq.

16. The biosensor strip as claimed in claim 15, **characterized in that** the surface resistivity of the conductive pattern layer (20) is equal to or less than 25 Ω/sq.

17. The biosensor strip as claimed in any one of claims 13 to 16, **characterized in that** the conductive pattern layer (20) has a hardness equal to or more than 2H.

18. The biosensor strip as claimed in any one of claims 13 to 17, **characterized in that** the biosensor strip further comprises a bio-sensing material layer (40) disposed in the reaction region (31) and in contact with the other portion of the conductive pattern layer (20) that is exposed in the reaction region (31).

19. The biosensor strip as claimed in claim 18, **characterized in that** the bio-sensing material layer (40) comprises a material of glucose oxidase.

20. The biosensor strip as claimed in any one of claims 13 to 19, **characterized in that** a material of the protection layer (30) is polyethylene terephthalate or polyvinyl chloride.

21. A method of preparing a biosensor strip, **characterized in** comprising the steps of:
providing a silver nanowire-containing composition as claimed in any one of claims 1 to 12;
screen printing a conductive pattern layer (20) on a substrate (10) by using the silver nanowire-containing composition, so as to obtain the biosensor strip; and
forming a protection layer (30) on the conductive pattern layer (20) to obtain the biosensor strip.

22. The method as claimed in claim 21, **characterized in that** the step of screen printing the conductive pattern layer (20) on the substrate comprises: pre-heating the substrate (10) to a temperature of 80°C to 90°C to obtain a pre-heated substrate, and screen printing the conductive pattern layer (20) on the pre-heated substrate by using the silver nanowire-containing composition.

23. The method as claimed in claim 21, **characterized in that** the step of screen printing the conductive pattern layer (20) on the substrate (10) comprises: dispersing the silver nanowire-containing composition, and screen printing the conductive pattern layer (20) on the substrate (10) by using the silver nanowire-containing composition.

24. The method as claimed in claims 21 or 23, **characterized in that** the step of screen printing the conductive pattern layer (20) on the substrate (10) comprises: screen printing the conductive pattern layer (20) on the substrate (10) by using the silver nanowire-containing composition, and drying the conductive pattern layer (20) at a temperature of 120°C to 130°C.
